# EUROPEAN PATENT APPLICATION

(11) **EP 3 871 941 A1**
(43) Date of publication of application: **01.09.2021**
(21) Application number: 21159805.7
(22) Date of filing: 28.02.2021
(51) Int. Cl.: B61B 12/00, H05B 3/84, B60L 53/00, H05B 3/86

(54) **A SET OF STATION AND GONDOLA**

(30) Priority: 29.02.2020 PL 43308720; 07.04.2020 PL 43347820
(71) Applicant: Bialka Ski Resort Spolka Z Organiczona Odpowiedzialnoscia, 34-405 Bialka Tatrzanska (PL)
(72) Inventor: Manka, Michal, 32-010 Luczyce (PL); Sitek, Radoslaw, 31-232 Krakow (PL); Zielinski, Wojciech, 31-514 Krakow (PL); Karpiel, Grzegorz, 31-841 Krakow (PL); Paturnej, Tomasz, 34-405 Bialka Tatrzanska (PL)
(74) Representative: Bury, Marek

(57) **Abstract**

Set comprising a station (**S)** and mobile gondola (**G**). The gondola (**G**) is equipped with an electrical energy storage system of the gondola powered from gondola contacts (**KG**), and the station is equipped with a power supply system with a power source (**Z**), attached to the station contacts (**KS**) which are complementary to the gondola contacts (**KG**), so that the gondola contacts (**KG**) and the station contacts (**KS**) are adapted to make electrical contact with each other when the gondola (**G**) is at the station (**S**). The gondola comprises a heater in the glazing (**O**) powered by an electrical energy storage system. According to the invention, the electrical heater of the glazing (**O**) of the gondola (**G**) is a silicone heater (**R2**), and the electrical energy storage system contains the gondola supercapacitor system (**CG**).

## Description

### Field of the invention

The invention concerns set comprising of a station and a gondola with a rechargeable electric window heating system, applicable in particular as a landscape gondola lift.

### State of the art

Gondola-lift-based landscape attraction systems enable the presentation of views to groups of up to several dozen people from a gondola travelling along a cableway located in an attractive area, especially in a mountainous region. The cableway and associated infrastructure are inherently linked to a set of station and gondola. An alternative to the cableway is an overhead rail on which the gondola is movable. Accordingly, panoramas of the landscape surrounding the railway infrastructure can be presented to the people inside the gondola. In the winter season, the presentation function is diminished by the dampness and frosting of the windows. The temperature difference between the inside and outside of the gondola causes frosting and freezing of the windows on the outside, as well as condensation on the inside. As a result, the cabin windows lose their transparency.

This can be prevented by heating the glazing. There are known methods and systems for heating windows in which a resistance wire is run through the layers of the glazing. Warm air blowing systems are also known. Both solutions require a continuous power supply.

There are known battery power supply systems, but these solutions have disadvantages resulting from the nature of batteries. Batteries are heavy, the charging process is long, and the battery itself is negatively sensitive to low temperatures. Moreover, a limited number of charge and discharge cycles of the battery significantly increases the cost of operation.

The publication of the French patent application FR2934833A1 describes a cable car comprising a set of a station and a mobile gondola equipped with a supercapacitor system used to power its heating system.

A Swiss patent document No. CH701736 discloses a system comprising a front glazing, a heating element, and a temperature sensor adapted to transmit the temperature of the glass to a control system. The control system is set to regulate the heat input transmitted to the glass based on the temperature of the glass. The control system includes a controller for determining the heat input required to avoid the formation of frost or condensation on the glass. The heating element consists of a grid of heating wires or electrically conductive layers deposited on the glass. Other examples of heating various vehicle components are disclosed in documents CH706357, CH701736, US2004041541, WO2004080776, CN109607051, and CN208603213.

U.S. Patent No. US8910578B2 discloses a set comprising a station and a mobile gondola i.e. lift cabin. The gondola is equipped with an electrical energy storage system powered from cabin contacts, containing a gondola supercapacitor system. The station is equipped with a power supply system with a power source attached to the station contacts complementary to the cabin contacts. The gondola and station contacts are designed to make electrical contact with each other when the gondola is at the station. The gondola is equipped with an converter that is powered by the supercapacitor system and supplies the gondola lift systems with their proper voltage. There are several disadvantages associated with this solution. At the station, it is difficult to provide a power source efficient enough to transfer enough energy to the gondola's supercapacitor system during a trip or short stop. Furthermore, some energy is lost in the converter, which has limited efficiency. The situation is further aggravated by the fact that the voltage of supercapacitors changes during discharge, the converter has unfavourable working conditions, and glazing heating systems are relatively energy-consuming because they transfer energy almost directly to the cooled external medium.

An additional complication in heating the gondola glazing according to state-of-the-art solutions is that the wires embedded in the glass limit visibility and spoil the viewing properties of the gondola.

### Summary of the invention

It is an object of the invention to solve the problems indicated above and to provide a set of station and landscape gondola free from such problems.

The invention concerns a set comprising a station and mobile gondola, wherein the gondola is equipped with an electrical energy storage system powered from gondola contacts, and the station is equipped with a power supply system with a power source, attached to the station contacts which are complementary to the gondola contacts, so that the cabin contacts and the station contacts are designed to make electrical contact with each other when the gondola is at the station. The gondola is equipped with a glazing with an electric heater powered by the electrical energy storage system. According to the invention, the electrical energy storage system contains the gondola supercapacitor system. The terminals of the gondola supercapacitor system are connected to the electric heater located in the glazing and to the gondola contacts. The power supply system contains the station supercapacitor system connected to the power source and to the station contacts, and the maximum allowable voltage value of the station supercapacitor system is at least twice the maximum allowable voltage value of the gondola supercapacitor system. The station supercapacitor system is connected to the station contacts via a switch controlled by a timer, and the supercapacitors in the station supercapacitor system are equipped with a station balancer system. The supercapacitors in the gondola supercapacitor system are connected by the gondola balancer system that shunts the gondola supercapacitor system when the forward voltage exceeds a value between 1.9 and 2.7 V.

Preferably, the balancer system comprises rectifier diodes incorporated in parallel with the supercapacitors of the supercapacitor system.

The timer is preferably connected to additional contacts.

Alterantively, the timer is connected to the gondola balancer system, so that the charging can be interrupted when the voltage is exceeded.

The gondola is optionally equipped with an electric floor heater with a resistance at least ten times lower than the resistance of the electric heater in the gondola glazing and the gondola contacts are connected to the terminals of the gondola supercapacitor system via the floor heater.

Preferably, the station contacts are equipped with a coil designed to accommodate the gondola contacts, connected in series between the station contacts and the power supply system.

The electric heater of the gondola glazing is preferably a silicone heater.

Preferably, the set comprises more than one gondola, which leads to a better use of the infrastructure.

The use of a supercapacitor system in the station's power supply system said supercapacitor system having a capacitance at least twice that of the gondola's supercapacitor system provides the possibility of sufficiently fast charging without extending the gondola's downtime at the station. Simultaneously, this solution makes it possible to avoid the use of converters. Furthermore, as low and safe for supercapacitors voltages are have to applied safety level for people is improved as well. A consequence of charging the gondola supercapacitor system with low current is that very large currents must be provided. This involves energy losses. These losses can be used to heat the gondola if one uses a floor heater connected in series so that charging current runs through said floor heater. Furthermore, the timer increases safety. Additional contacts used for triggering the timer are the simplest solution for detecting the presence of the gondola and synchronizing the switch with the presence of the gondola. Alternatively, other systems, photocells, or manual switching can be used; one can also rely on the predictability of the gondola movement. Discharging the gondola supercapacitor system through the heater in the glazing without the intermediation of converters leads to better energy utilization. This results in a high efficiency of the power supply system for transferring the energy needed to clean the glazing. In addition, the inductance of the heater in the glazing limits the rate of current rise. Silicone heaters have worked particularly well in this regard, although it is possible to use wire embedded in glazing. The silicone heater is less occluding when admiring the landscape and it can be long. The use of a coil at the station contacts designed to accommodate the gondola contacts results in the current flowing through the station contact coil pulling the gondola contacts into the coil during charging and pressing them against the station contacts to facilitate electrical contact. By increasing the contact force, the contact resistance between the station contacts and the gondola contacts is reduced during charging. This provides a feedback loop-an increase in current results in a decrease in contact resistance, making it easier to model the operation of the system

### Description of drawings

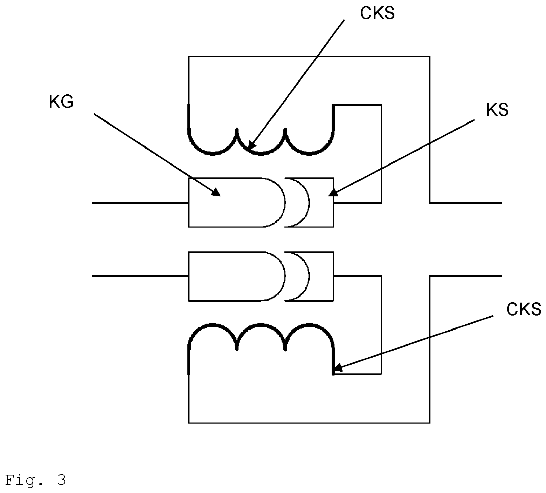

The embodiments of invention have been described below in detail, with reference to the drawing in which Fig. 1 shows an electrical schematics of the gondola and station as embodiment of the invention, Fig. 2 shows electrical schematics of the gondola and station in an alternative embodiment of the invention, while Fig. 3 shows schematically the station contacts and the gondola contacts.

### Embodiments of the invention

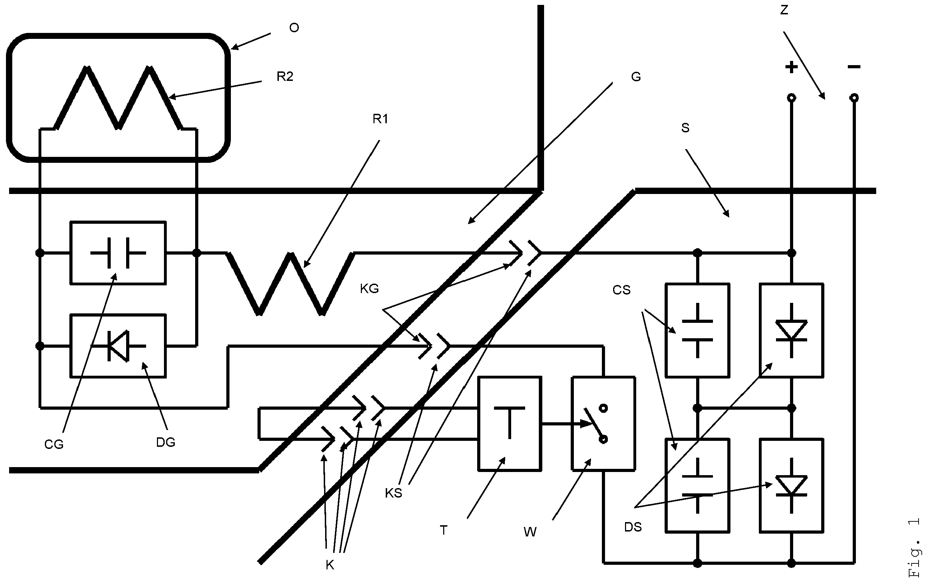

The circuit diagram shown in Fig. 1 shows the connections in the gondola **G** - station **S** system. The circuits of the electrical equipment in the gondola **G** and the station **S** are connected through a set of complementary station contacts **KS** and the gondola contacts **KG.**

The gondola **G,** after being parked at the station **S,** closes the circuit of timer **T** through additional contacts **K.** Timer **T,** after the set time-in the present system, 5 seconds-closes the main circuit by closing the switch **W.**

Closing the switch **W** results in the flow of high current from the station supercapacitor system **CS** which is initially charged to the gondola supercapacitor system **CG** through the station contacts **KS,** the gondola contacts **KG,** and the resistance circuit serving as the floor heater **R1** provided in the floor of the gondola **G.** The value of the floor heater resistance **R1** determines the maximal current flowing between the supercapacitors. By selecting the time constant of the circuit with the floor heater resistance **R1** and the capacitances **CS** and **CG,** a short recharge time can be obtained - 120 seconds in this embodiment. The use of supercapacitors that have high capacitance and low internal resistance allows one to freely shape the recharge time. The recharge time is selected according to the planned transfer time of the passengers. The use of a floor heater is not necessary. Adequate resistance can also be provided on the station side, but it is preferable to use the energy loss to heat the gondola

There are a number of possible state of the art solutions to provide complementary contacts that can be used in sets of: a station with a gondola or a larger number of gondolas. Due to the high charging currents associated with the use of supercapacitors, a solution can be achieved using a coil CKS that automatically clamps during the charging time.

In such a configuration, the current flowing from the station supercapacitor system **CS** to the gondola supercapacitor system **CG** through the station contacts **KS,** the gondola contacts **KG,** also flows through the station contact coil **CKS,** inducing in it a magnetic field which results in a force attracting the gondola contacts **KG** to the station contacts **KS.** As a result, the contact resistance decreases due to current flow, reducing energy loss and making it easier to model the charging process, which is sensitive to contact resistances due to the low resistances of other components. This effect is strongest when the gondola contacts are made of a ferromagnetic material.

When the gondola **G** leaves the station **S,** charging of the station supercapacitor system **CS** from the source **Z** continues. The charging current is much smaller than the recharge current-approximately, the ratio of currents corresponds to the ratio of the charging time of the station supercapacitor system **CS** to the time of recharging from the station supercapacitor system **CS** to the gondola supercapacitor system **CG.** The power source can be connected to the mains and/or renewable energy sources such as photovoltaic panels or wind generators.

In the present embodiment, each supercapacitor in the station supercapacitor system can operate at a maximum voltage of 2.7 V and is protected by the station balancer system DS, including in this embodiment a high-power rectifier diode system connected in parallel. This ensures that the fluctuation of production parameters does not result in damage to subsequent supercapacitors.

The gondola supercapacitor system **CG** is also protected by the gondola balancer system **DG** connected in parallel. These diodes prevent exceeding the maximum voltage of the supercapacitors. They have a forward voltage matched to the maximum operating voltage of the gondola supercapacitor system **CG** -in this embodiment: 2.5 V.

Depending on the components selected, it was experimentally determined that it is reasonable to use diodes with a forward voltage in the range of 1.9 to 2.7 V.

In this embodiment, the travel time is 10 minutes. The gondola supercapacitor system CG is discharged by the electrical heater **R2** with a set resistance during travel. The electric heater **R2** is located in the window **O** of the gondola and is embedded between the layers of the glazing.

The system works best when the capacitance of the gondola supercapacitor system **CG** is the same as the capacitance of the station supercapacitor system **CG,** but the maximum voltage of the station supercapacitor system **CS** should be at least twice the maximum voltage of the gondola supercapacitor system **CG.**

In the present embodiment, the gondola supercapacitor system **CG** uses a single supercapacitor with a capacitance of 3000 F and an allowable maximum voltage of 2.7 V, operating at a maximum voltage of 2.5 V. The station supercapacitor system **CS** uses a ladder series-parallel connection of four such supercapacitors. A person skilled in the art is able to design series-parallel connections of capacitors to achieve the required capacitance and voltage. This resulted in two sets of two supercapacitors connected in parallel with a capacitance of 3000 F + 3000 F = 6000 F. Connecting two such sets with a capacitance of 6000 F each in series gave an equivalent capacitance of 3000 F. At the same time, a maximum allowable voltage of 5.4 V was obtained, i.e. twice as high as the voltage of a single supercapacitor. A safety margin was applied and a 5 V source **Z** was used.

Such a solution is easily scalable. Then, for every one supercapacitor in the gondola supercapacitor system **CG,** there are four supercapacitors in the station supercapacitor system **CS.** This ratio is preferable for ergonomic reasons, since it is easier to provide the necessary cubic capacity for a supercapacitor storage system in the station S than in the gondola **G.**

In this embodiment, a supercapacitor system with a total capacitance of 3000 F and a maximum operating voltage of 5.4 V was used at the station S. A 5 V source Z was used, assuming a supercapacitor breakdown safety margin of 0.4 V. The circuit contains four supercapacitors in a ladder series-parallel connection.

The resistance of the floor heater **R1** is 0.02 Ω, which translates into maximum heating power in the initial phase of recharging: 1.25 kW, with a maximum current of 250 A. The flat floor heater has low inductance, so the recharge characteristics correspond to the characteristics of the 2C-R-C system and are falling: after 20 s: 400 W, after 60 s: 25 W.

The time for recharging and passenger boarding is 120 s. The gondola supercapacitor system **CG** voltage reaches 2.454 V after this time, and the recharge current drops below 5 A.

A silicone electric heater **R2** with a rating of 20 W/m is embedded in the glazing **O.** The total resistance of the electric heater **R2** is 0.33 Ω. In typical gondolas, good results can be obtained using heaters with a resistance of 0.2 to 5 Ω.

The power output on the heater does not exceed 20 W in peak. Experiments show that providing a glazing temperature of 5°C or higher causes the frost to disappear, and in a situation where there are people in the gondola, the energy provided by the heater according to the embodiment of the invention is sufficient.

The heater **R2** is located at the bottom part of the glazing. The initial current is 8 A. The process of heating the glazing is much slower than the recharge process. After a minute, the heater outputs 16 W of power-a current of 6.9 A flows. After 3 minutes, the heater outputs 14.3 W of power-a current of 6.5 A flows. After 6 minutes, the heater outputs 10 W of power-a current of 5.5 A flows, and the voltage of the gondola supercapacitor system **CG** drops to 1.815 V.

Both the station supercapacitor system and the gondola supercapacitor system use gondola balancer systems DG and station balancer systems **DS** in the form of rectifier diodes with a forward voltage of 2.5 V.

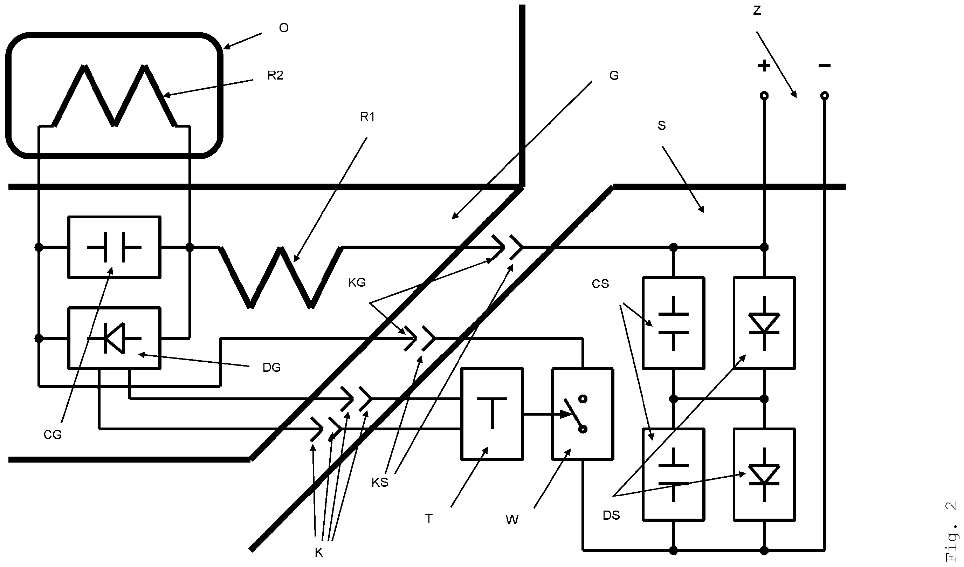

Alternative embodiment of implementation shown in Fig. 2 uses a more elaborate gondola balancer system **DG** connected to a timer **T.** This makes it easy to interrupt charging when the voltage is exceeded. This can happen if, for some reason, the gondola supercapacitor system **CG** is not fully discharged.

The set according to the invention may be used in landscape gondola lift infrastructure or in other applications requiring good visibility when exposed to varying conditions, including, in particular, low temperatures. More than one gondola can be used in the set - the invention is scalable in this respect.

Preferably, the invention combines the ability to rapidly charge the gondola supercapacitors with good use of energy for heating the gondola glazing. This is made possible by the paradoxical use of a supercapacitor system at the station as well - where, in principle, an energy storage system is not required, but where supercapacitors act as an efficient source. The disproportion between the resistance of the floor heater and the resistance of the electric heater in the glazing translates into the ability to use the energy loss of the recharge to heat the gondola while ensuring a long-lasting supply of energy to the glazing. The use of a silicone heater provides the ability to heat the glazing without disturbing the visibility and aesthetics of the landscape. The gondola contact coil provides a secure and low-resistance connection during charging.

## Claims

1. A set comprising a station (**S**) and mobile gondola (**G**)**,** wherein the gondola (**G**) is equipped with an electrical energy storage system powered from gondola contacts (**KG**)**,** and the station is equipped with a power supply system with a power source (**Z**)**,** attached to a station contacts (**KS**) which are complementary to the gondola contacts (**KG**)**,** so that the cabin contacts (**KG**) and the station contacts (**KS**) are adapted to make electrical contact with each other when the gondola (**G**) is at the station (**S**), and the gondola (**G**) is equipped with a glazing (**O**) having an electric heater (**R2**) powered by the electrical energy storage system,
**characterized in that**
the electrical energy storage system has gondola supercapacitor system (**CG**) with terminals connected to the electric heater (**R2**) located in the glazing (**O**) and to the gondola contacts (**KG**);
the power supply system contains the station supercapacitor system (**CS**) connected to the power source (**Z**) and to the station contacts (**KS**), and the maximum allowable voltage value of the station supercapacitor system (**CS**) is at least twice the maximum allowable voltage value of the gondola supercapacitor system (**CG**), and the station supercapacitor system (**CS**) is connected to the station contacts (**KS**) via a switch (**W**) controlled by a timer (**T**), and the supercapacitors in the station supercapacitor system (**CS**) are equipped with a station balancer system (**DS**)

2. Set according to claim 1, **characterized in that** the station balancer system (**DS**) comprises rectifier diodes incorporated in parallel with supercapacitors of the supercapacitor system.

3. Set according to claim 1 or 2, **characterized in that** it has a timer (**T**) additional contacts (**K**) connected thereto.

4. Set according to claim 3, **characterized in that** the timer (**T**) is connected to the gondola balancer system (**DG**).

5. Set according to claim 4, **characterized in that** the gondola (**G**) is equipped with an electric floor heater (**R1**) with a resistance at least ten times lower than the resistance of the electric heater (**R2**) in the gondola glazing and the gondola contacts (**KG**) are connected to the terminals of the gondola supercapacitor system (**CG**) via the floor heater (**R1**).

6. Set according to any of the claims from 1 to 5, **characterized in that** the station contacts (**KS**) are equipped with a coil (**CKS**) designed to accommodate the gondola contacts (**KG**), and connected in series between the station contacts (**KS**) and the power supply system (**Z**).

7. Set according to any of the claims from 1 to 6, **characterized in that** the electric heater (**R2**) of the glazing (**O**) of the gondola (**G**) is a silicone heater.

8. Set of a gondola and station according to any of the claims from 1 to 7, **characterized in that** it comprises more than one gondola (**G**).
